# EUROPÄISCHE PATENTSCHRIFT

(11) **EP 2 686 495 B1**
(45) Veröffentlichungstag und Bekanntmachung des Hinweises auf die Patenterteilung: **18.09.2024**
(21) Anmeldenummer: 12710142.6
(22) Anmeldetag: 15.03.2012
(51) Int. Cl.: E03C 1/04, E03C 1/05

(54) **SANITÄRARMATUR MIT EINEM ARMATURENGEHÄUSE UND EINER KONTROLLEINHEIT**
SANITARY FITTING HAVING A FITTING HOUSING AND A CONTROL UNIT
ROBINETTERIE SANITAIRE POURVUE D'UN BOÎTIER DE ROBINETTERIE ET D'UNE UNITÉ DE CONTRÔLE

(30) Priorität: 15.03.2011 DE 102011014124
(43) Veröffentlichungstag der Anmeldung: 22.01.2014
(73) Patentinhaber: Aquis Sanitär AG, 9445 Rebstein (CH)
(72) Erfinder: WAWRLA, Andreas, 9443 Widnau (CH); WALLERSTORFER, Kurt, 5204 Strasswalchen (AT)
(74) Vertreter: Otten, Roth, Dobler & Partner mbB Patentanwälte
(86) Internationale Anmeldenummer: PCT/EP2012/001160
(87) Internationale Veröffentlichungsnummer: WO 2012/123121

(56) Entgegenhaltungen:
- DE-A1- 19 625 252
- DE-U1- 20 207 365
- DE-U1- 202006 005 303

## Beschreibung

Die Erfindung betrifft eine Wasserarmatur gemäß Anspruch 1.

Zum Beispiel sind aus den Druckschriften DE 100 22 350 A1 oder DE 10 2006 060 929 B4 Sanitärarmaturen mit einem Armaturengehäuse und einer Kontrolleinheit bekannt, wobei ein Absperrventil innerhalb eines Armaturenhalters angeordnet ist. Der Armaturenhalter ist und bleibt fest mit dem Montageort der Armatur verbunden. Der Montageort kann hierbei ein Sanitärkörper wie ein Waschbecken etc. oder eine Arbeitsplatte sein.

Zudem ist aus der DE 203 13 450 U1 eine Duschvorrichtung mit einer steuerbaren Heizeinrichtung, einer Zuleitung für Wasser und einen Ablauf für austretendes Duschwasser, und mit einer Steuereinrichtung zur Ansteuerung der Heizeinrichtung bekannt, wobei die Steuereinrichtung eine Benutzeroberfläche mit einer Eingabeeinrichtung zur Auswahl eines von wenigstens zwei Duschprogrammen aufweist bzw. mit dieser in Verbindung steht. Darüber hinaus ist bereits eine Küchenarmatur der Firma Kludi mit der Handelsbezeichnung "E-GO" erhältlich, diese ist mit einem Sensor ausgestattet, der das Wasser durch aktive Bewegung fließen lässt. Dies geschieht berührungslos und bei Bedarf auch manuell. Dementsprechend ist diese sowohl elektronisch als auch manuell bedienbar ist.

Diese Küchenarmatur weist neben der gewöhnlichen Wasserleitung nach dem Mischventil mit Mengenregelung einen Bypass auf, in dem der IR-Sensor ein elektromagnetisches Absperrventil öffnet oder schließt. Über den Bypass wird somit eine automatische, berührungslose Bedienung realisiert, wobei z.B. kein manuelles Öffnen mit ggf. schmutzigen Händen notwendig ist. Um z.B. dagegen das Spülbecken voll laufen zu lassen, wird der manuelle, gewöhnliche Einhebelmischer betätigt, so dass Wasser in der gewünschten Menge und der gewünschten Temperatur aus dem Auslauf heraus fließt.

Nachteilig hierbei ist jedoch, dass diese Technologie bzw. das Doppelsystem zum Öffnen bzw. Betätigen des Wasserflusses nur bedingt oder z.T. gar nicht auf andere sanitäre Anwendungen wie z.B. eine Brause für eine Dusche oder Badewanne etc. übertragbar ist.

Darüber hinaus ist aus der DE 196 25 252 A1 ein Einhebel-Mischer mit einem berührungslosen Sensor bekannt, wobei der Sensor ausschließlich den oberhalb der Armatur befindlichen Raum beobachtet. So wird oberhalb der Armatur die Wasserabgabe für eine bestimmte Zeit ausgelöst und unmittelbar danach beziehungsweise innerhalb dieser vorgegebenen Zeit wird über den Einhebel-Mischer in herkömmlicherweise das Stellglied betätigt.

Aufgabe der Erfindung ist es, eine Sanitärarmatur der eingangs genannten Art vorzuschlagen, die flexibel für möglichst alle sanitären Anwendungen wie Küche, Bad, Schwimmbad, Sauna, Toilette, Schlachthäuser oder dergleichen sowohl im (halb-) öffentlichen als auch im privaten Bereich einsetzbar ist.

Die Aufgabe wird von einer Wasserarmatur mit den Merkmalen des Anspruchs 1 gelöst. Durch die in den abhängigen Ansprüchen genannten Maßnahmen sind vorteilhafte Ausführungen und Weiterbildungen der Erfindung möglich.

Eine erfindungsgemäße Wasserarmatur weist demnach wenigstens zwei oder mehrere parallele Wasserleitungen zwischen einem oder mehreren Wassereinlässen und einem einzigen, gemeinsamen Wasserauslass auf. In den parallel geführten Wasserleitungen befindet sich jeweils ein Stellglied zum Öffnen und Schließen des Wasserflusses.

Um die Wasserarmatur erfindungsgemäß multifunktionsfähig auszugestalten, werden dabei erfindungsgemäße Mittel zur Steuerung der Stellglieder derart vorgesehen, dass bei

**Fortsetzung auf der ursprünglichen Seite 3** geöffnetem Stellglied in einer der parallelen Wasserleitungen das oder die weiteren Stellglieder in der oder den weiteren parallelen Wasserleitungen geschlossen sind.

Durch diese Maßnahme wird es möglich, den Wasserauslass der Wasserarmatur über unterschiedliche Betätigungsorgane zu aktivieren. In jeder der parallel geführten Wasserleitungen können dabei verschiedene Parameter, wie z. B. die Temperatur oder die Durchflussmenge unbeeinflusst von den anderen parallelen Wasserleitungen eingerichtet werden. Dadurch, dass stets nur ein Stellglied in einer der parallelen Wasserleitungen aktiviert sein kann, beeinflussen sich die parallelen Wasserleitungen nicht gegenseitig, es fließt vielmehr jeweils der vorgesehene Wasserfluss mit den gewünschten Parametern wie z. B. Temperatur und Durchflussmenge zum Wasserauslass, der durch das jeweilige Stellglied aktiviert ist.

Dabei können vorteilhafterweise eine oder mehrere der parallel geführten Leitungen auch zwei oder mehrere Betätigungselemente für dasselbe Stellglied aufweisen. So kann beispielsweise sowohl ein Näherungssensor und ein Berührungstaster für die Betätigung desselben Stellglieds und somit zur Aktivierung derselben Wasserleitung eingesetzt werden.

Gemäß der Erfindung kann somit beispielsweise eine Sanitärwie eine Küchenarmatur oder eine Dusch-Brause sowohl manuell über einen mechanischen Hebel, z.B. Einhandmisch-Hebel, als auch über einen Sensor oder Taster/Schalter im Auslauf (z.B. im Kopf der Auszugsbrause und/oder am Ende des Auslaufs) bedient werden. Wenn sie manuell bedient wird verhält sie sich wie eine ganz normale Sanitär- bzw. Küchenarmatur. Wenn der manuelle Hebel geschlossen ist, dann wird ist der Sensor/Schalter aktiv und der Wasserfluss kann darüber an- oder abgeschaltet werden.

Die beiden Funktionen können dabei so realisiert werden, dass, wenn manuell bedient wird (über Bedienhebel), die Sensorik ausgeschaltet ist.

Erfindungsgemäß können aber auch andere Varianten mit unterschiedlichen Ansteuerungsverfahren für einen gemeinsamen Wasserauslass vorgesehen werden, wobei jeweils erfindungsgemäß sichergestellt ist, dass nur eine der verschiedenen parallel geführten Wasserleitungen zur Ansteuerung des Wasserauslasses aktiviert ist.

Um die erfindungsgemäße Art der Steuerung zu verwirklichen, wird in einer bevorzugten Ausführungsform wenigstens ein Zustandssensor zur Erfassung des Betriebszustandes wenigstens eines Stellgliedes vorgesehen. Mit Hilfe dieses Zustandssensors kann erkannt werden, ob ein Stellglied aktiviert oder inaktiviert ist. Bei aktiviertem Stellglied kann sodann eine Ansteuerung der anderen Stellglieder derart erfolgen, dass diese blockiert sind. Auf diese Weise ist sichergestellt, dass am Wasserauslass jeweils nur der Wasserfluss aus einer der parallelen Wasserleitungen, das heißt aus derjenigen mit aktiviertem Stellglied, angesteuert wird.

Vorzugsweise wird weiterhin wenigstens ein Mischorgan zum Mischen von Wasser für wenigstens eine der parallel geführten Wasserleitungen aus wenigstens zwei Wassereinlassleitungen vorgesehen.

Mit Hilfe eines solchen Mischorgans kann das Wasser in der entsprechenden Wasserleitung hinsichtlich verschiedener Parameter, beispielsweise der Temperatur eingestellt werden. Durch das Mischen muss nicht zwangsweise stets die Temperatur eingestellt werden, es ist auch möglich, andere Wasserparameter, beispielsweise den Härtegrad oder dergleichen einzustellen, wenn Wasser mit unterschiedlichen Eigenschaften aus zwei Wassereinlassleitungen zur Verfügung steht.

Ein solches Mischorgan kann im Wasser vor oder nach einer Verzweigung wenigstens einer Einlassleitung zu den wenigstens zwei parallel geführten Wasserleitungen angeordnet sein. Wird ein solches Mischorgan im Wasserfluss vor einer Verzweigung einer Einlassleitung zu parallel geführten Wasserleitungen angeordnet, so wird das Mischwasser zugleich für zwei oder mehrere Zweigleitungen vorgesehen.

Wird das Mischwasser jedoch nach einer Verzweigung einer Einlassleitung angeordnet, so ist es möglich, dass dadurch entstehende Mischwasser selektiv für eine oder auch mehrere parallel geführte Wasserleitungen zu mischen.

In einer praktischen Anwendung dieser Ausführungsform kann beispielsweise sowohl in einem Warmwassereinlass als auch in einem Kaltwassereinlass jeweils eine Verzweigung vorgesehen werden. Hierdurch ist es möglich, mittels zweier separater Mischorgane unterschiedliche Wassertemperaturen für zwei parallel geführte Leitungen einzustellen. Beispielsweise kann eine fest eingestellte Wassertemperatur mit einem festen Mischungsverhältnis für den Fall eingestellt werden, dass eine Wasserarmatur über einen berührungslosen Sensor aktiviert wird.

Parallel dazu können jedoch die Zweigleitungen des Warmwassereinlasses sowie des Kaltwassereinlasses beispielsweise zu einer herkömmlichen Handhebelmischeinheit geführt werden, sodass im Falle der Betätigung der Wasserarmatur über eine solche manuelle Mischeinheit die Wunschtemperatur des Bedieners flexibel einstellbar ist.

Voraussetzung für die erfindungsgemäße Funktion einer Wasserarmatur ist in diesem Fall, dass bei der manuellen Betätigung des Wasserflusses mit zugehörigem Stellglied die anderen Stellglieder inaktiviert werden.

Grundsätzlich ist es zwar auch möglich, sofern das Ventil einer manuell bedienbaren Steuereinheit nicht mechanisch manuell betätigt wird, auch die manuelle Einheit zu inaktivieren, wenn ein anderes Stellglied, beispielsweise ein sensorgesteuertes Stellglied aktiviert ist, in den meisten Anwendungsfällen wird jedoch die Übersteuerung der sensorgesteuerter Stellglieder durch manuell betätigte Stellglieder sinnvoll sein, da bei manueller Bedienung sichergestellt ist, dass die Bedienperson den durch das manuelle Stellglied einstellbaren Wasserfluss wünscht.

In einer weiteren Ausführungsform der Erfindung kann ein Mischorgan eine Verzweigung zu wenigstens zwei parallel geführten Wasserleitungen umfassen. Dies ermöglicht eine Bauform, in der zwei oder mehrerer Einlassleitungen mit einem Mischorgan verbunden werden, von dem dann die wenigstens zwei parallel geführten Wasserleitungen ausgehen. Das Wasser für alle parallel geführten Wasserleitungen ist entsprechend einheitlich gemischt.

Vorzugsweise wird wenigstens eine Vorrichtung zur Einstellung der Durchflussmenge durch wenigstens eine der parallel geführten Wasserleitungen vor deren gemeinsamen Wasserauslass vorgesehen. Sofern in einer der parallel geführten Wasserleitungen ein manuell gesteuertes Stellglied vorgesehen ist, beispielsweise ein Einhandmischer, so wird regelmäßig durch ein solches Stellglied manuell die gewünschte Durchflussmenge eingestellt. Für die weitere oder die weiteren parallel geführten Wasserleitungen ist es ebenfalls vorteilhaft, wenn die Durchflussmenge einstellbar ist. Diese kann dabei manuell oder elektronisch fest oder variabel eingestellt werden.

Wie bereits oben erwähnt, wird vorzugsweise wenigstens eines der Stellglieder manuell bedienbar ausgestaltet. Dies stellt sicher, dass das Wasser im Wasserauslass stets flexibel und variabel entsprechend den Wünschen einer Bedienperson bezogen werden kann. Durch die eine oder mehrere hierzu parallel geführten Wasserleitungen ist zugleich eine anderweitige Funktion, beispielsweise eine berührungslose Funktion realisierbar.

Zur Einstellung der Durchflussmenge in einer oder mehreren parallel geführten Wasserleitungen ist es von Vorteil, wenn die Möglichkeit vorgesehen wird, dass mit einer einzigen Einstellung die Durchflussmenge für mehrere Wasserleitungen eingestellt wird. Hierzu wird vorteilhafterweise eine Vorrichtung zur Einstellung der Durchflussmenge mit Mitteln zur Übertragung des Wertes der eingestellten Durchflussmenge auf eine andere Vorrichtung zur Einstellung der Durchflussmenge durch eine andere der parallel geführten Wasserleitungen versehen. Somit sind durch eine einzige Einstellung zwei Vorrichtungen zur Einstellung der Durchflussmenge auf die gleiche Durchflussmenge einstellbar. Grundsätzlich muss bei einer Übertragung der Einstellung des Wertes einer Durchflussmenge auf eine andere der parallel geführten Wasserleitungen jedoch nicht der gleiche Wert übernommen werden.

Es ist grundsätzlich ebenso denkbar, ein vorbestimmtes oder aber auch ein abhängig von weiteren Parametern variables Verhältnis zwischen der Durchflussmenge der einen Wasserleitung und der anderen Wasserleitung einzustellen, ohne dass diese separat eingestellt werden müssen. So kann beispielsweise in einer Vorrichtung zur Einstellung der Durchflussmenge eine entsprechende Verarbeitung des übertragenen Wertes der eingestellten Durchflussmenge einer anderen parallel geführten Wasserleitung stattfinden und abhängig von diesem übertragenen Wert eine demgegenüber abgeänderte einzustellende Durchflussmenge eingestellt werden.

Eine mögliche Ausführung dieses Merkmals kann beispielsweise dadurch gegeben sein, dass der Maximalwert der zuletzt manuell eingestellten Durchflussmenge erfasst und daraus die Durchflussmenge für eine der hierzu parallelen Wasserleitungen bestimmt wird. Somit findet beispielsweise eine automatische Anpassung einer berührungslosen Funktion an die Gepflogenheiten einer Bedienperson mit Handbetätigung statt. Sofern beispielsweise eine Bedienperson stets eine kleine Durchflussmenge handbetätigt bezieht, so wird dieser Wert identisch oder verändert auf die berührungslose Funktion übertragen, sodass beispielsweise eine Person die sparsam beim Wasserverbrauch ist, diese handbetätigte Eigenschaft ohne Zutun auf die berührungslos arbeitende Funktion übernimmt.

Vorteilhafterweise ist wenigstens eines der Stellglieder einer der parallel geführten Wasserleitungen mit zumindest einer Betätigungsvorrichtung derart bedienbar, dass wenigstens eines der weiteren Stellglieder, bevorzugt jedoch alle weiteren Stellglieder in weiteren parallel geführten Wasserleitungen übersteuerbar sind.

Grundsätzlich ist eine erfindungsgemäße Wasserarmatur denkbar, bei der die Stellglieder ohne Prioritäten betätigbar sind. So kann beispielsweise eine Wasserarmatur vorgesehen werden, bei der eine Handbetätigung nur dann möglich ist, wenn zeitgleich kein anderes Stellglied aktiviert ist, das heißt wenn kein Wasserfluss aufgrund eines Sensors oder anderer Betätigungsorgane fließt. Auch eine Steuerung, bei der immer das zuletzt betätigte Betätigungsorgan ein zugeordnetes Stellglied öffnet, während alle anderen Stellglieder inaktiviert oder geschlossen werden, ist denkbar.

Es kann in bestimmten Ausführungsformen jedoch von Vorteil sein, die Betätigung eines der Stellglieder so auszugestalten, dass diese andere Stellglieder übersteuern kann. Soll beispielsweise eine Wasserarmatur auf jeden Fall bei Betätigung einer manuellen Bedieneinheit Wasser liefern, so kann dadurch, dass der manuellen Betätigungsvorrichtung Vorrang eingeräumt wird derart, dass sie andere Stellglieder übersteuern kann, sichergestellt werden, dass bei Handbetätigung alle nicht handbetätigten Stellglieder inaktiviert werden. Eine manuell, beispielsweise mechanisch bediente Betätigungsvorrichtung kann demnach auch bei Wasserfluss betätigt werden, der anderweitig ausgelöst wurde und bewirkt zugleich mit der manuellen Aktivierung des zugehörigen Stellglieds eine Inaktivierung aller anderen.

Vorteilhafterweise werden hierzu ein oder mehrere Zustandssensoren für die jeweiligen Stellglieder vorgesehen, sodass die Mittel zur Steuerung der Stellglieder in der Lage sind, zu erkennen, ob und welche Stellglieder aktiviert bzw. inaktiviert sind. Derartige Sensoren können unmittelbar am Stellglied angebracht sein, um z. B. Ventilstellungen zu erfassen. Der Zustand eines Stellglieds kann jedoch auch indirekt erfasst werden, in dem der Wasserfluss durch die zugehörige parallel geführte Leitung, z. B. mit einem Durchflussmesser erfasst wird.

In einer besonderen Ausführungsform einer Wasserarmatur wird vorzugsweise am Wasserauslass bzw. an einem Auslasselement für den Wasserauslass wenigstens ein Betätigungselement zum Betätigen wenigstens eines der Stellglieder vorgesehen. So kann beispielsweise unmittelbar am Wasserauslass ein Näherungssensor angeordnet werden, sodass eine berührungslose Funktion der Wasserarmatur sichergestellt ist. Bei Annäherung an den Wasserauslass wird über den Näherungssensor sodann die entsprechend diesem Sensor und diesem zugehörigen Stellglied zugeordnete parallel geführte Wasserleitung geöffnet, sodass ein Wasserfluss stattfindet.

Zusätzlich können auch weitere Sensoren für die gleiche oder auch für andere parallel geführte Wasserleitungen verwendet werden. Werden verschiedene Sensoren für die gleiche parallel geführte Wasserleitung verwendet, so ist es sinnvoll, eine entsprechende Logik vorzusehen, die es erlaubt, den Wasserfluss bei Betätigung nur eines der Sensoren zu öffnen. So kann beispielsweise neben einem berührungslosen Sensor im Bereich des Wasserauslaufs auch noch ein Drucktaster oder dergleichen als Betätigungsvorrichtung vorgesehen werden, mittels dem die gleiche parallel geführte Wasserleitung über das gleiche Stellglied bzw. das gleiche Ventil zu aktivieren ist. Das Vorsehen zweier Sensoren kann insofern vorteilhafte sein, da bei Ausfall des einen Sensors noch ein weiterer zur Betätigung zur Verfügung steht, um einen Wasserfluss mit den für diese parallel geführte Wasserleitung gültigen Parametern sicherzustellen, beispielsweise mit einer voreingestellten Durchflussmenge und einer voreingestellten Temperatur.

Ohne Weiteres ist es erfindungsgemäß jedoch auch möglich, weitere Sensoren für weitere Stellglieder in weiteren parallel geführten Wasserleitungen vorzusehen, um selektiv je nach Auswahl des Betätigungselementes den gewünschten Wasserfluss zu aktivieren.

In einer besonderen Ausführungsform der Erfindung wird das Auslasselement als aus dem Armaturengehäuse ausziehbarer Brausekopf ausgebildet. Dies stellt eine Ausführungsform dar, in der es möglich ist, bei eingestecktem Brausekopf über einen Nährungssensor der Armatur berührungslos zu betreiben. In Verbindung mit einer manuell bedienbaren Betätigungsvorrichtung, beispielsweise einer Einhebelmischeinheit, die vorzugsweise bei Betätigung die anderen Stellglieder übersteuert, kann die erfindungsgemäße Armatur in herkömmlicher Weise betätigt werden.

Beim Ausziehen des Brausekopfs wird dieser in der Regel derart erfasst, dass die berührungslose Funktion nicht aktiviert wird. Um Wasser mit einer voreingestellten Durchflussmenge oder einer voreingestellten Temperatur zu beziehen, ist es in diesem Fall sinnvoll, wenn an der Armatur ein weiteres Betätigungselement, beispielsweise ein Drucktaster oder dergleichen vorgesehen ist, mittels der gezielt der hierdurch vorgegebene Wasserfluss wählbar ist.

In Verbindung mit einem mobilen Auslasselement, das an einem ortsfesten Armaturenteil ausziehbar angeordnet ist, beispielsweise ein Brausekopf oder dergleichen, können weitere vorteilhafte Ausführungen der Erfindung verwirklicht werden.

So kann beispielsweise der Betriebsstatus der Steuerung abhängig davon gestaltet werden, ob das mobile Auslassteil vom Ortsfesten abgezogen oder mit diesem verbunden ist. Die Position des mobilen Auslassteiles kann durch einen Sensor erfasst werden, durch den der entsprechende Betriebsmodus eingestellt wird.

Ein Betriebsmodus bei ausgezogenem Mobilteil kann beispielsweise in der Gestalt ausgebildet sein, dass ein oder mehrere durch ortsfeste Sensoren und/oder Betätigungsorgane betätigbare Stellglieder beim Ausziehen des mobilen Auslassteils inaktiviert oder geschlossen werden. Beispielsweise können Stellglieder, die durch Näherungssensoren oder manuelle Bedienelemente am ortsfesten Armaturenteil betätigt werden inaktiviert oder geschlossen werden. Auch die Sensoren selbst können gegebenenfalls den Betriebsmodus abhängig vom Ausziehen oder Einstecken des mobilen Teils ändern.

In Verbindung mit einer solchen Steuerung der durch ortsfeste Sensoren und/oder Betätigungsorganen betätigten Stellglieder oder auch unabhängig davon können Stellglieder, die durch Sensoren oder Betätigungsorganen des mobilen Auslaufteils betätigt werden, abhängig vom ausgezogenen oder eingesteckten Zustand des mobilen Auslaufteils gesteuert werden. So können beispielsweise beim Abziehen eines mobilen Auslaufteils ein oder mehrere durch Sensoren oder Betätigungsorgane am mobilen Auslaufteil betätigbare Stellglieder aktiviert oder geöffnet werden. Somit wäre der Wasserfluss über Sensoren oder Betätigungsorgane am mobilen Auslaufteil steuerbar. Dies ist insbesondere dann von Vorteil, wenn das mobile Auslaufteil über eine größere Strecke vom ortsfesten Armaturenteil ausziehbar ist, sodass eine Bedienperson von den ortsfesten Sensoren und/oder Betätigungsorganen weiter entfernt ist.

Beim Einstecken oder Verbinden mit dem ortsfesten Armaturenteil kann der Betriebsmodus wieder gewechselt werden, das heißt, ein oder mehrere durch Sensoren oder Betätigungsorgane am mobilen Auslaufteil betätigbare Stellglieder können durch das Einstecken wieder inaktiviert oder geschlossen werden.

Das Entfernen eines mobilen Auslaufteils vom ortsfesten Armaturenteil kann beispielsweise über einen einfachen elektrischen Kontakt oder aber auch über sonstige Sensoren wie Näherungssensoren, Hall-Sensoren, optische Sensoren wie Lichtschranken usw. erfasst werden.

Die Betätigungselemente können unterschiedliche Sensoren umfassen. So kann beispielsweise ein so genannter Touch-Sensor für die Betätigung eines Stellglieds vorgesehen werden. Wie bereits erwähnt, kann auch ein berührungslos arbeitender Sensor verwendet werden. Denkbar wären auch Sensoren, die sowohl eine Touch-Funktion und eine berührungslos arbeitende Funktion in einem Sensor realisiert, wobei der Betriebsmodus vorteilhafterweise umschaltbar ist. Wie bereits erwähnt, können auch verschiedene Sensoren mit unterschiedlichen Funktionsprinzipien in einer oder mehreren der parallel geführten Leitungen eingesetzt werden. Die genannten Sensoren können auf unterschiedlichsten physikalischen Prinzipien beruhen. Es kann sich dabei beispielsweise um kapazitive oder induktive Sensoren handeln oder aber auch um IR-Sensoren, Ultraschallsensoren usw.

In einer Weiterbildung der Erfindung kann auch eine Sensorik vorgesehen werden, um das Trennen bzw. das Ausziehen eines auslaufseitigen Auslaufsteils zu detektieren.

Diese Sensorik kann beispielsweise dazu verwendet werden, um bei Trennen des auslaufseitigen Auslaufteils eine Variation des Programmablaufs der Steuermittel durchzuführen.

Beispielsweise kann eine Verstellung der Sensorreichweite als Variation beim Trennen oder Ausziehen des auslaufseitigen Auslaufteils in Frage, um die Funktion der Wasserarmatur zu verbessern. Die Trennung oder das Ausziehen eines auslaufseitigen Auslaufteils kann beispielsweise auch die Wasserflusssteuerung, beispielsweise die Wassermenge beeinflussen. Zugleich kann vorgesehen werden, dass mit dem Trennen oder dem Ausziehen eines auslaufseitigen Auslaufteils ein oder mehrere Sensoren abgeschaltet werden. So kann beispielsweise beim manuellen Ausziehen eines Auslaufteils ein in diesem Auslaufteils vorhandener Näherungssensor abgeschaltet werden, da er bei der Handhabung des Auslaufteils nicht mehr benötigt wird.

Weiterhin kann eine Sensorik vorgesehen werden, mittels der manuelle Bedienelemente, beispielsweise ein manueller Bedienhebel in seiner Position, zum Beispiel in seiner Grundposition erkannt wird. Auch hieraus kann eine entsprechende Funktion der Mittel zur Steuerung der Stellelemente abgeleitet werden, beispielsweise die bereits oben angeführte Funktion der Übersteuerung, das heißt bei Abweichung von der Grundposition können beispielsweise alle anderen Stellglieder deaktiviert sein.

Ein manuelles Bedienelement, beispielsweise ein manueller Bedienhebel kann gleichzeitig als Touch- oder berührungsloser Sensor ausgebildet sein bzw. diese Sensoren beinhalten.

Derartige Sensoren können zur Beeinflussung des Programmablaufs in der Steuerung der Wasserarmatur führen.

Ein Sensor in einem manuellen Bedienelement kann beispielsweise dazu dienen, von einem Automatikbetrieb auf einen Manuell-Modus umzuschalten. Dies ist insbesondere dann von Vorteil, wenn die manuelle Bedienung vollständig mechanisch stattfindet, sodass die sonstigen, elektronisch angesteuerten Stellglieder in dem Manuellmodus zu deaktivieren sind.

Die Elektronik für die Steuerung sowie die Sensorik der erfindungsgemäßen Wasserarmatur wird vorzugsweise im auslaufseitigen Teil des Auslaufs integriert. Auf diese Weise ist die Sensorik leicht zugänglich.

Um Elektronikelemente besser handzuhaben kann hierbei eine Kabelverbindung vorgesehen werden, die eine gewisse Beweglichkeit einer Elektronikeinheit erlaubt, bevor diese komplett abgekoppelt wird.

Der auslaufseitige Teil der Wasserarmatur kann, insbesondere dann, wenn er die elektronischen Bauteile für die Steuerung der Wasserarmatur beinhaltet auch demontierbar, beispielsweise abziehbar ausgestaltet sein, um die Handhabung beispielsweise bei der Montage, bei Wartung und Reparatur zu erleichtern.

Das auslaufseitige Element der Wasserarmatur kann beispielsweise über einen Wasserschlauch mit dem Wasserfluss verbunden sein, um eine gewisse Beweglichkeit dieses Teils ohne Unterbrechung der wasserleitenden Verbindungen zu ermöglichen.

Das auslaufseitige Armaturenelement wird vorzugsweise elektrisch isoliert, um einerseits einen störungsfreien Bebtrieb eventueller darin untergebrachter elektronischer Komponenten zu gewährleisten. Im Falle einer Verbindung mit einem elektrischen Versorgungsnetz ist die elektrische Isolierung des Wasserauslaufs auch zur Unfallverhütung sinnvoll und notwendig.

Vorzugsweise wird im Wasserauslauf bzw. in dem Auslaufelement der Wasserarmatur ein Temperatursensor zur Messung der Wassertemperatur vorgesehen. Dies ermöglicht beispielsweise eine geregelte Einstellung der Temperatur, beispielsweise über einen steuerbaren Mischer von Kalt- und Warmwasser. Grundsätzlich wäre jedoch auch der Einsatz eines Heizelementes zur Temperatureinstellung innerhalb der Wasserarmatur denkbar.

Zwischen den verschiedenen Sensoren und der Steuerungselektronik ist eine entsprechende Kommunikation erforderlich, die vorteilhafterweise auf die zur Spannungsversorgung dienenden Spannungen aufmoduliert wird, sodass separate Kommunikationsleitungen entfallen können.

Zur Steuerung des Wasserflusses, beispielsweise der Zeitdauer, der Durchflussmenge oder sonstiger Wasserparameter wie Temperatur oder dergleichen kann beispielsweise die Zeit oder ein Zeitintervall einer Sensorbetätigung, beispielsweise einer Berührung verwendet werden.

Vorteilhafterweise werden weiterhin Anzeigeelemente an der Wasserarmatur, beispielsweise eine oder mehrere LED angebracht, um die verschiedenen Funktionen der Wasserarmatur zur Anzeige zu bringen.

Wie bereits mehrfach erwähnt, wird eine erfindungsgemäße Wasserarmatur vorzugsweise so gesteuert, dass zum einen nur alternativ manuell oder aber sensorgesteuert Wasser bezogen werden kann und vorzugsweise so, dass die manuelle Bedienung die sensorgesteuerte Bedienung derart übersteuert, dass eine sensorgesteuerte Bedienung ausgeschaltet wird, sobald eine manuelle Bedienung erfolgt.

Zur Einstellung der Durchflussmenge können verschiedene verstellbare Ventile oder Drosseln verwendet werden, beispielsweise können so genannte Proportionalventile verwendet werden.

Die Einstellung der Durchflussmenge kann dabei fest oder variabel sein, beispielsweise kann in einer sensorgesteuerten Funktion die Menge des Wasserflusses auch über den oder die verwendeten Sensoren gesteuert werden.

Grundsätzlich sind verschiedenste Möglichkeiten für die Einstellung und Steuerung der Wassermenge an der Armatur oder deren Auslauf denkbar. Diese können zur festen oder zur variablen Mengensteuerung verwendet werden. In Frage kommen alle Varianten von manuellen und sensorischen Bedienelementen, beispielsweise Tasten, Reiter, Drehknöpfe, Näherungssensoren, Lichtsensoren, kapazitive Sensoren, induktive Sensoren, Hall-Sensoren usw.

Eine weitere Möglichkeit zur Einstellung verschiedener Funktionen der Wasserarmatur, beispielsweise zur Steuerung der Durchflussmengen besteht darin, ein Bedienelement vorzusehen, mittels dem eine drahtlose Kommunikation zur Armaturensteuerung bzw. zu den Mitteln zur Steuerung der Stellglieder möglich ist.

Bevorzugt wird eine Kontrolleinheit in einer erfindungsgemäßen Wasserarmatur vorgesehen, die die Steuerung und gegebenenfalls die Regelung der Armatur vornimmt. Diese Kontrolleinheit ist dementsprechend mit allen Sensoren der Wasserarmatur verbunden und in der Lage, entsprechende Aktoren oder Stellglieder, zum Beispiels Mischventile, Einschaltventile, Durchflussdrosseln oder -ventile anzusteuern. Eine solche Kontrolleinheit kann als zentrale Steuer- und/oder Regeleinheit ausgebildet oder auch in zwei oder mehrere Untereinheiten aufgeteilt sein. Etwaige Untereinheiten können an verschiedenen Orten funktionsgerecht untergebracht werden. Eine zentrale Einheit hingegen vereinfacht die Kommunikation zwischen allen elektronischen Komponenten und erleichtert die Steuerung oder Regelung.

Gemäß einer vorteilhaften Ausführung der Erfindung ist das erste Stellglied z. B. ein Mischventil oder dergleichen in vorteilhafter Weise mit Hilfe des Zustandssensors bzw. Zustandsschalters als Master für das zweite Stellglied eines Bypasses, das heißt einer parallel geführten Wasserleitung, ausgebildet und kontrolliert diesen. Wenn vorteilhafterweise das erste Stellglied der Kontrolleinheit ein elektrisches Signal bzw. eine Information übermittelt bzw. mechanisch ggf. über einen Hebelmechanismus oder dergleichen das zweite Stellglied des Bypasses in Betrieb gesetzt wird kann dieses die Bypassleitung öffnen, ansonsten ist diese in vorteilhafter Weise geschlossen. D.h. wenn das erste Stellglied keine Information oder kein Signal bzw. keine (elektrische und/oder mechanische) Freischaltung bzw. kein Inbetriebsetzen sendet/macht, kann das zweite Stellglied die Bypassleitung nicht öffnen und bleibt somit außer Betrieb bzw. verschlossen. Das zweite Stellglied ist somit erfindungsgemäß als sog. "Slave" des sog. "Masters", d.h. des ersten Stellgliedes ausgebildet.

Durch diese vorteilhafte Kopplung bzw. Verschaltung der beiden Stellglieder wird eine Anwendung für alle sanitären Einsatzgebiete in sinnvoller bzw. praxistauglicher Weise möglich. Zu einer besonderen Ausführung der Erfindung ist dabei eine definierte Auswahl der Öffnung des Bypasses bzw. der Hauptleitung durch die Bedienperson realisierbar. Dies ist beispielsweise gerade für Anwendungen in Duscharmaturen, Großküchen, Schlachthöfen, Toiletten von entscheidendem Vorteil oder sogar absolute Vorraussetzung für einen Einsatz.

Dies trifft auch bei einer Anordnung des Betätigungselementes des zweiten Stellgliedes am Auslaufelement wie ein Brausekopf etc. bzw. im Bereich des Endes des Auslaufes bzw. im Bereich des Perlators, Strahlreglers oder dergleichen zu. Hierdurch kann die Bedienperson das zweite Stellglied unmittelbar am Auslauf bzw. der Auslauföffnung und somit am Ort, an dem das Wasser benötigt wird, betätigen und somit das Wasser ein- und/oder ausschalten. Dies ist beispielsweise beim Haare waschen unter der Dusche von enormem Vorteil.

### Ausführungsbeispiel

Ein Ausführungsbeispiel der Erfindung ist in der Zeichnung dargestellt und wird nachstehend anhand der Figuren unter Angabe weiterer Vorteile näher erläutert.

Im Einzelnen zeigen:
- Figur 1: eine schematisches Blockschaltbild einer Wasserarmatur gemäß der Erfindung,
- Figur 2: eine weitere Ausführung eines schematischen Blockschaltbildes einer erfindungsgemäßen Wasserarmatur,
- Figur 3: eine schematische Darstellung einzelner Komponenten, insb. eines Mischers einer Wasserarmatur gemäß der Erfindung,
- Figur 4: eine schematische Darstellung von Komponenten "unter Tisch" einer Wasserarmatur gemäß der Erfindung,
- Figur 5: eine Figur 4 entsprechende Darstellung der Ausführung gemäß Figur 2
- Figur 6: eine schematische Darstellung von Komponenten am Auslauf, insb. eines Brausekopfes einer Wasserarmatur gemäß der Erfindung.

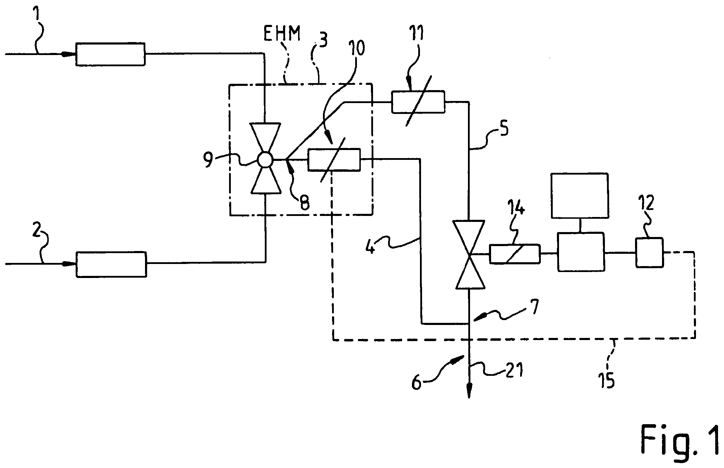

Eine Wasserarmatur kann wahlweise, wie in Figur 1 gezeigt, mit nur einem (kalten) Wasserzulauf 1, 2 oder mit zwei Wasserzuläufen 1, 2 warm und kalt betrieben werden. Im letztgenannten Fall ist ein Mischventil 9 vorzusehen, so dass in einer gemeinsamen Wasserleitung 4 oder alternativ in einem Bypass 5, d.h. einer erfindungsgemäß parallel geführten Leitung, das Mischwasser strömt.

Die Wasserleitung 4 endet an einem in Figur 1 nicht näher dargestellten Auslauf 6. In Strömungsrichtung vor dem Auslauf 6 ist eine Zweigstelle 7 vorgesehen, an der die Wasserleitung 4 und der Bypass 5 zusammenkommen, d.h sich wieder vereinigen. An einer zweiten Zweigstelle 8 trennen sich die beiden Leitungen 4, 5.

Da die zweite Zweigstelle 8 in Strömungsrichtung des Wassers hinter dem Mischventil 9 angeordnet ist, kann durch das Mischventil 9 die Temperatur in beiden Leitungen 4, 5 eingestellt bzw. geregelt werden.

Die Mengenregelung erfolgt jedoch in vorteilhafter Weise getrennt mittels zweier separater Mengenventile 10 und 11, wobei das Mengenventil 10 in das Ventil 3 integriert ist. Das Ventil 3 kann im Wesentlichen als Einhandhebelmischer ausgebildet werden.

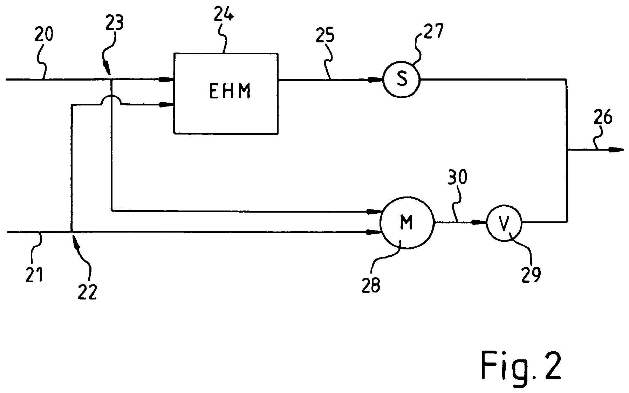

Bei einer Armatur gemäß dem Bockschaltbild nach Figur 2 findet eine Verzweigung zweier Wassereinlässe 20, 21 statt, bevor diese auf eine Mischvorrichtung treffen. Die Wasserleitung 20 kann beispielsweise eine Kaltwasserleitung sein, während die Wasserleitung 21 in diesem Fall als Warmwasserleitung ausgebildet ist. Aufgrund der Verzweigungen 22, 23 können verschiedene Mischvorrichtungen vorgesehen werden. So ist beispielsweise ein manuell bedienbarer so genannter Einhebelmischer 24 vorgesehen, in dem das gewünschte Mischungsverhältnis gemischt und zugleich die gewünschte Durchflussmenge manuell eingestellt wird. In der Ausführungsform gemäß Figur 2 ist in der aus dem Einhebelmischer ausgehenden Leitung 25, die eine der erfindungsgemäßen parallel geführten Wasserleitungen zum Wasserauslass 26 darstellt noch ein Durchflussmesser 27, der die manuell eingestellte Durchflussmenge sensorisch erfasst. Der Durchflussmesser 27 kann somit zum indirekten Erfassen des Zustandes des Einhebelmischers verwendet werden. Bei Erfassung eines Durchflusses durch die Leitung 25 kann z. B. die Übersteuerung weiterer Stellglieder z. B. des Schaltventils 29 ausgelöst werden.

Parallel zum Einhandmischer 24 ist ein zweites Mischorgan 28 mit einem im Wasserfluss nachgeschalteten Einschaltventil 29 vorgesehen. Die aus dem zweiten Mischorgan 28 austretende Wasserleitung 30 mit dem Schaltventil 29 stellt eine weitere parallel geführte Leitung gemäß der Erfindung dar.

Beim Ausführungsbeispiel gemäß der Figur 2 kann das Mischungsverhältnis zwischen dem Warm- und Kaltwassereinlässen 20, 21 separat einerseits durch den Einhebelmischer 24 und andererseits durch das Mischorgan 28 unterschiedlich eingestellt werden. Bei sensorischer Betätigung des Ventils 29 wird das Wasser im Wasserauslauf 26 durch die parallel geführte Leitung 30 bezogen. Bei Betätigung des Einhebelmischers 24 wird das Wasser mit der manuell eingegebenen Durchflussmenge sowie dem entsprechenden Mischungsverhältnis und der daraus resultierenden Temperatur über die parallel geführte Leitung 25 bezogen. Erfindungsgemäß sind die beiden Stellglieder 24, 29 so gesteuert, dass jeweils nur eines davon aktiviert sein kann. Sofern zudem die vorteilhafte Variante gewählt wird, dass über den Einhebelmischer 24 alle anderen Stellglieder, das heißt im vorliegenden Fall gemäß Figur 2 das Stellglied 29 übersteuerbar ist, so kann ein rein mechanischer Einhebelmischer verwendet werden, dessen Zustand beispielsweise über den Durchflussmesser 27 erfasst und bei der Steuerung des Stellglieds 29 berücksichtigt wird. In diesem Fall wird das Ventil 29 stets geschlossen, sobald der Einhebelmischer 24 betätigt wird. Somit ist sichergestellt, dass in jedem Fall die gewünschte Durchflussmenge und Temperatur (Mischungsverhältnis) zum Wasserauslauf 26 gelangt, ohne dass sich die parallel geführten Leitungen 25, 30 stören.

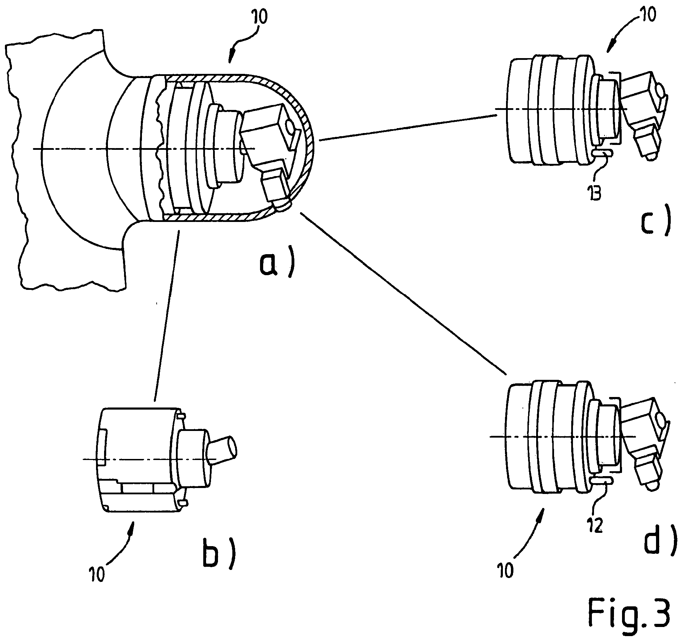

Vorteilhafterweise kann das Ventil 3 bzw. der Einhebelmischer 24 im Unterschied zum Stand der Technik einen Sensor 13, insbesondere einen Hall-Sensor 13, einen induktiven oder kapazitiven Sensor oder alternativ einen mechanischen Schalter/Taster 12 auf (vgl. Figur 3) aufweisen. Dieser Sensor 13 oder Taster 12 ist mit einem zweiten, im Bypass 5 angeordneten Stellglied 14 verbunden, z.B. mittel einem vorteilhaften elektrischen Kabel und/oder drahtlos mit einem Sender und Empfänger z.B. per Funk oder dergleichen (vgl. Strichlinie 15 in Figur 1). Hiermit wird eine vorteilhafte Elektronik des zweiten Stellgliedes 14 bzw. Durchflussventil 14 gesteuert. Vorzugsweise kann das Ventil 14 nur geöffnet werden, wenn der Einhebelmischer (EHM) 24 bzw. das Ventil 3 nicht betätigt, d.h. geschlossen ist. Wird das Ventil 3 betätigt, d.h. das Mengenventil 10 (teilweise) geöffnet, wird das zweite Stellglied 14 bzw. dessen Elektronik außer Betrieb gesetzt. Das Ventil 3 ist der Master des Ventils 14 bzw. Slaves 14. Ebenso ist der Einhebelmischer 24 der Master des Schaltventils 29.

Vorteilhafterweise kann der Bypass einen separaten Mengenregler 11 aufweisen, der ggf. voreingestellt und/oder auch variabel z.B. mechanisch über einen Hebel oder dergleichen im Betrieb bzw. von der Bedienperson veränderbar ist.

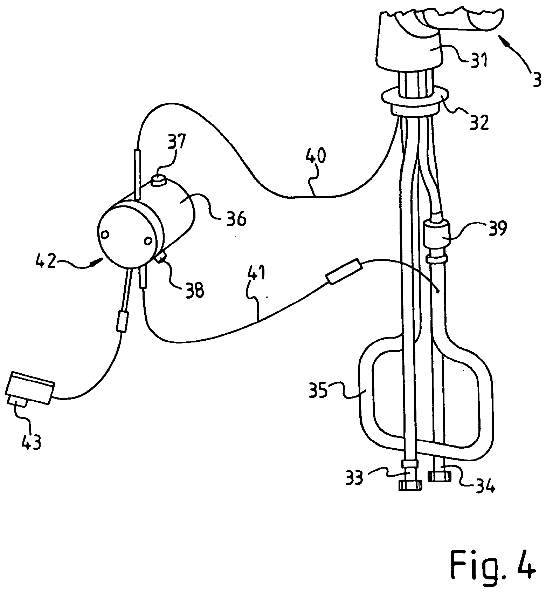

Figur 4 zeigt die Komponenten unterhalb eines Waschtisches einer Armatur gemäß dem Blockdiagramm nach Figur 1.

Ein Einhebelmischer 31 wird oberhalb einer nicht eingezeichneten Waschtischplatte montiert und mittels des Gegenstücks 32 fixiert.

Die beiden Einlassleitungen 33 führen beispielsweise kaltes und warmes Wasser in die Mischbatterie des Einhebelmischers 31. Das Mischwasser wird von dort wieder nach unten durch die Leitung 35 geführt und anschließend in einer Schleife wieder nach oben in Richtung Auslass geleitet.

Parallel zu Leitung 35 wird in nicht näher dargestellter Weise ein Ventil 36 mit seinem Eingang 37 sowie seinem Ausgang 38 geschaltet. Hierzu können beispielsweise Schlauchverzweigungen ähnlich wie der Schlauchadapter 39 verwendet werden.

Zwei Kabel 40, 41 veranschaulichen die elektrische bzw. elektronische Verbindung des Ventils 36 zu verschiedenen, nicht näher dargestellten und beschriebenen Sensoren. Das Ventil 36 ist hierzu mit einer Elektronikeinheit 42 versehen, die beispielsweise über ein Netzteil 43 oder aber auch über einen Akku mit Spannung versorgt wird.

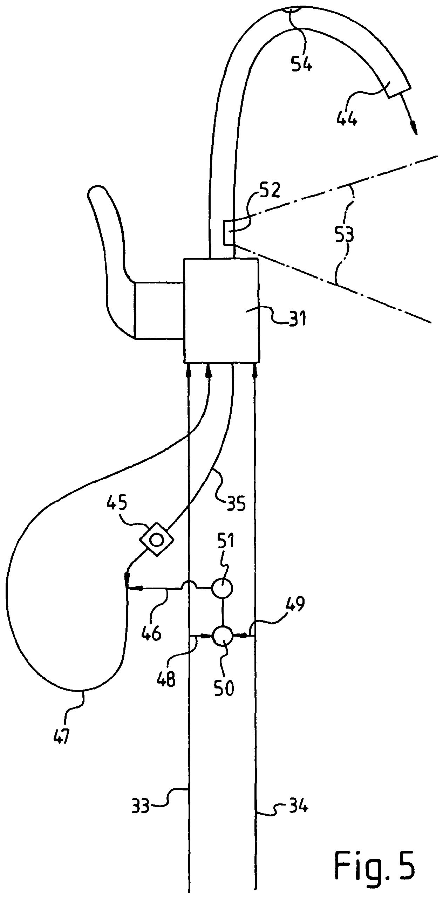

Figur 5 zeigt eine vergleichbare Variante für eine Ausführung gemäß Figur 2. Analog zur Darstellung gemäß Figur 4 finden sich hier die beiden Einlassleitungen 33, 34, die dem Einhebelmischer 31 zugeführt werden. Der Einhebelmischer 31 mischt das warme und kalte Wasser aus den Einlässen 33 und 34 und leitet dieses in der Leitung 35 wieder nach unten. Die Leitung 35 wird in einer Schleife geführt und erneut durch den Einhebelmischer 31 geleitet, sodass sie den Wasserauslass 44 speisen kann. Ein Durchflusssensor 45 ist dabei in der Leitung 35 angeordnet. Hinter dem Durchflusssensor 45 mündet eine parallel geführte Leitung 46 in die zum Auslass 44 führende gemeinsame Auslassleitung 47 ein.

Die parallel geführte Leitung 46 wird über zwei von den Einlassleitungen 33, 34 abgezweigte Zweigleitungen 48, 49, ein Mischorgan 50 sowie ein Schaltventil 51 der gemeinsamen Auslassleitung 47 zugeschaltet.

Im Vergleich mit Figur 2 ist somit ohne Weiteres ersichtlich, dass der Einhebelmischer 31 dem Einhebelmischer 24 entspricht. Der Durchflusssensor 45 entspricht dem Durchflusssensor 27.

Wie bereits oben angeführt, kann bei Verwendung eines Durchflusssensors 27 bzw. 45 in der Leitung 25 bzw. 35, die ausschließlich vom Einhebelmischer 31 gespeist wird eine zusätzliche Sensorik zur Erfassung des Zustandes des Einhebelmischers 24 bzw. 31 entfallen, da bei Betätigung des Einhebelmischers 24 bzw. 31 der Durchflussmesser 27 bzw. 45 anspricht und so eine nicht näher dargestellte Kontrolleinheit in der Lage ist, das Schaltventil 29 bzw. 50 zu schließen, sofern dies noch nicht geschlossen ist.

Dementsprechend entspricht die Funktion der Ausführung gemäß Figur 5 vollständig dem anhand Figur 2 beschriebenen Ausführungsbeispiel.

Weiterhin sind in Figur 5 noch zwei Sensoren oberhalb eines Waschtisches erkennbar, zum einen ein berührungslos arbeitender Sensor 52, beispielsweise in Form eines Näherungssensors, dessen Sichtfenster 53 schematisch dargestellt ist. Oberhalb des Wasserauslaufs 44 ist zum anderen ein Drucktaster 54 angeordnet, der alternativ zum Näherungssensor 52 die Ansteuerung des Schaltventils 50 bewirken kann.

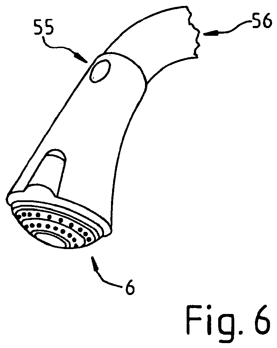

In Figur 6 ist ein Brausekopf 6 bzw. Auslauf 6 schematisch abgebildet. Hierbei wird deutlich, dass ein Taster 55 im Bereich des Auslaufes 6 bzw. der Auslauföffnung angeordnet ist. Hierdurch kann z. B. das zweite Stellglied 14 des Bypasses 5 (vgl. Figur 1) oder das weitere Stellglied bzw. Schaltventil 29 in dem Bypass bzw. der parallel geführtel Leitung 50 (vgl. Figur 2) betätigt bzw. kontrolliert werden. Vorzugsweise ist eine Aktivierung (die ein Öffnen des Wasserflusses erlaubt) jedoch nur möglich, wenn der EHM bzw. das Ventil 3 oder der Einhebelmischer 24 nicht geöffnet ist. Dies ist gerade bei Anwendungen mit einem Wasserschlauch 56 zwischen Auslauf 6 und Ventil 3 von großem Vorteil, da sich hier beispielsweise die Person nicht zum ggf. weiter entfernten EHM hinbewegen muss, sondern am Ort des Wasseraustrittes Wasser ein- oder ausschalten kann. Dies ist nicht nur bei Duschen, sondern auch in Großküchen, Schlachthöfen von enormem Vorteil.

Generell kann der Taster 55, 54 des Auslaufs 6, 26 entweder als mechanischer Taster oder als Sensor, insbesondere IR-Sensor oder dergleichen ausgebildet werden. Vor allem bei relativ großen Ausläufen 6 wie bei Duschköpfen oder dergleichen kann in vorteilhafter Weise eine drahtlose Verbindung 15 zwischen Auslauf 6, 26 und Ventil 14 bzw. zweitem Stellglied 14, 29 vorgesehen werden. Hierbei können Akkus oder Batterien und/oder Solar-Zellen und/oder eine Wasserturbine mit Generator zur elektrischen Energieversorgung im Auslauf 6, 26 angeordnet werden. Hiermit kann ein elektrische Energie autarker Auslauf 6 realisiert werden, wodurch keine elektrischen Kabel über den Schlauch 21 zur Armatur bzw. zum Ventil 14 und/oder Ventil 3, bzw. 29 geführt/gelegt werden müssen.

Die elektrische Energieversorgung der Ventile 3 und/oder 14, bzw. 29 etc. kann beispielsweise über einen Netzanschluss und/oder wenigstens eine Batterie oder Akku und/oder wenigstens eine Solarzellen und/oder einer Wasserturbine mit Generator erfolgen.

### Bezugszeichenliste:

- 1: Wasserzulauf
- 2: Wasserzulauf
- 3: Ventil
- 4: Wasserleitung
- 5: Bypass
- 6: Auslauf
- 7: Zweigstelle
- 8: Zweigstelle
- 9: Mischventil
- 10: Mengenventil
- 11: Mengenregler
- 12: Schalter / Taster
- 13: Sensor
- 14: Stellglied
- 20: Wassereinlass (kalt)
- 21: Wassereinlass (warm)
- 22: Verzweigung
- 23: Verzweigung
- 24: Einhebelmischer
- 25: parallel geführte Leitung
- 26: Wasserauslass
- 27: Durchflussmesser
- 28: Mischorgan
- 29: Schaltventil
- 30: parallel geführte Leitung
- 31: Einhebelmischer
- 32: Gegenstück
- 33: Einlassleitung
- 34: Einlassleitung
- 35: Leitung
- 36: Ventil
- 37: Eingang
- 38: Ausgang
- 39: Schlauchadapter
- 40: elektrische Leitung
- 41: elektrische Leitung
- 42: Elektronikeinheit
- 43: Netzteil
- 44: Wasserauslass
- 45: Durchflusssensor
- 46: parallel geführte Leitung
- 47: gemeinsame Auslassleitung
- 48: Zweigleitung
- 49: Zweigleitung
- 50: Mischorgan
- 51: Schaltventil
- 52: Näherungssensor
- 53: Sichtfenster
- 54: Drucktaster
- 55: Taster
- 56: Wasserschlauch

## Patentansprüche

1. Wasserarmatur mit einem Armaturengehäuse, einem wenigstens zwei Wassereinlässen (1, 2, 20, 21) gemeinsam zugeordneten Wasserauslass (6, 26), wobei wenigstens zwei in Bezug auf den Wasserfluss parallel geführte Wasserleitungen (4, 5, 25, 30) zwischen den zwei oder mehreren Wassereinlässen (1, 2, 20, 21) und dem gemeinsamen Wasserauslass (6, 26) vorgesehen sind, wobei in den parallel geführten Wasserleitungen (4, 5, 25, 30) jeweils ein Stellglied (3, 9, 10, 11, 14, 28, 29) zum Öffnen und Schließen des Wasserflusses vorgesehen ist, wobei Mittel zur Steuerung der Stellglieder (3, 9, 10, 11, 14, 28, 29) derart vorgesehen sind, dass bei geöffnetem Stellglied (3, 9, 10, 11, 14, 28, 29) in einer der parallelen Wasserleitungen (4, 5, 25, 30) das oder die weiteren Stellglieder (3, 9, 10, 11, 14, 28, 29) in der oder den weiteren parallelen Wasserleitungen (4, 5, 25, 30) geschlossen sind **und** wobei **ein Mischventil (9) vorgesehen ist, so dass in einer gemeinsamen Wasserleitung (4) oder in einem Bypass (5) als parallele Wasserleitungen (4, 5, 25, 30) das Mischwasser strömt, wobei in Strömungsrichtung vor dem Wasserauslass (6) eine erste Zweigstelle (7) vorgesehen ist, an der die Wasserleitung (4) und der Bypass (5) zusammenkommen, wobei sich an einer zweiten Zweigstelle (8) sich die beiden Wasserleitungen (4, 5) trennen, und wobei die zweite Zweigstelle (8) in Strömungsrichtung des Wassers hinter dem Mischventil (9) angeordnet ist, so dass durch das Mischventil (9) die Temperatur in beiden Wasserleitungen (4, 5) eingestellt bzw. geregelt werden kann.**

2. Wasserarmatur nach Anspruch 1 **dadurch gekennzeichnet, dass** wenigstens ein Zustandssensor (12, 13, 27) zur Erfassung des Betriebszustandes wenigstens eines der Stellglieder vorgesehen ist.

3. Wasserarmatur nach einem der vorgenannten Ansprüche **dadurch gekennzeichnet, dass** ein Mischorgan zum Mischen von Wasser für wenigstens eine der parallel geführten Wasserleitungen (25, 30) aus wenigstens zwei Wassereinlassleitungen vorgesehen ist.

4. Wasserarmatur nach einem der vorgenannten Ansprüchen **dadurch gekennzeichnet, dass** wenigstens ein Mischorgan im Wasserfluss vor oder nach einer Verzweigung wenigstens einer Einlassleitung zu den wenigstens zwei parallel geführte Wasserleitungen angeordnet ist.

5. Wasserarmatur nach einem der Ansprüche 3 oder 4 **dadurch gekennzeichnet, dass** das Mischorgan eine Verzweigung zu den wenigstens zwei parallel geführten Wasserleitungen umfasst.

6. Wasserarmatur nach einem der vorgenannten Ansprüche **dadurch gekennzeichnet, dass** wenigstens eine Vorrichtung zur Einstellung der Durchflussmenge durch wenigstens eine der parallel geführten Wasserleitungen vor deren gemeinsamen Wasserauslass vorgesehen ist.

7. Wasserarmatur nach einem der vorgenannten Ansprüche **dadurch gekennzeichnet, dass** wenigstens eines der Stellglieder manuell bedienbar ist.

8. Wasserarmatur nach einem der vorgenannten Ansprüche **dadurch gekennzeichnet, dass** eine Vorrichtung zur Einstellung der Durchflussmenge durch eine der parallel geführten Wasserleitungen zur Übertragung des Wertes der eingestellten Durchflussmenge auf eine andere Vorrichtung zur Einstellung der Durchflussmenge durch eine andere der parallel geführten Wasserleitungen ausgebildet ist, sodass durch eine Einstellung beide Vorrichtungen zur Einstellung der Durchflussmenge auf die gleiche Durchflussmenge einstellbar sind.

9. Wasserarmatur nach einem der vorgenannten Ansprüche, **dadurch gekennzeichnet, dass** wenigstens zwei der Stellglieder als elektrische Stellglieder ausgebildet sind.

10. Wasserarmatur nach einem der vorgenannten Ansprüche, **dadurch gekennzeichnet, dass** die Mittel zur Steuerung wenigstens eines der Stellglieder einer der parallel geführten Wasserleitungen so ausgebildet sind, dass bei Betätigung eines Stellgliedes wenigstens eines der weiteren Stellglieder, in einer weiteren parallel geführten Wasserleitung übersteuerbar ist.

11. Wasserarmatur nach einem der vorgenannten Ansprüche, **dadurch gekennzeichnet, dass** ein den Wasserauslass aufweisendes Auslasselement wenigstens ein Betätigungselement (52, 54) zum Betätigen wenigstens eines der Stellglieder (51) umfasst.

12. Wasserarmatur nach dem vorgenannten Anspruch, **dadurch gekennzeichnet, dass** das Betätigungselement einen berührungslosen Bewegungssensor (52) umfasst.

13. Wasserarmatur nach einem der vorgenannten Ansprüche, **dadurch gekennzeichnet, dass** das Auslasselement als aus dem Armaturengehäuse ausziehbarer Brausekopf ausgebildet ist.

## Claims

1. Water fitting having a fitting housing, having a water outlet (6, 26) commonly assigned to at least two water inlets (1, 2, 20, 21), wherein at least two water lines (4, 5, 25, 30) which are guided in parallel in relation to the water flow path are provided between the two or more water inlets (1, 2, 20, 21) and the common water outlet (6, 26), wherein, in the parallelly guided water lines (4, 5, 25, 30), there is provided in each case one control element (3, 9, 10, 11, 14, 28, 29) for opening and closing the water flow path, wherein means are provided for controlling the control elements (3, 9, 10, 11, 14, 28, 29) such that, when a control element (3, 9, 10, 11, 14, 28, 29) in one of the parallel water lines (4, 5, 25, 30) is open, the one or more further control elements (3, 9, 10, 11, 14, 28, 29) in the one or more further parallel water lines (4, 5, 25, 30) are closed and wherein a mixing valve (9) is provided such that the mixed water flows in a common water line (4) or in a bypass (5) as parallel water lines (4, 5, 25, 30), wherein provided upstream of the water outlet (6) as viewed in the flow direction is a first branch point (7) at which the water line (4) and the bypass (5) merge, wherein the two water lines (4, 5) separate at a second branch point (8), and wherein the second branch point (8) is arranged downstream of the mixing valve (9) as viewed in the flow direction of the water such that the temperature in both water lines (4, 5) can be set or regulated by means of the mixing valve (9).

2. Water fitting according to Claim 1, **characterized in that** at least one state sensor (12, 13, 27) is provided for detecting the operating state of at least one of the control elements.

3. Water fitting according to one of the preceding claims, **characterized in that** a mixing element is provided for mixing water for at least one of the parallelly guided water lines (25, 30) from at least two water inlet lines.

4. Water fitting according to one of the preceding claims, **characterized in that** at least one mixing element is arranged in the water flow upstream or downstream of a branching of at least one inlet line to the at least two parallelly guided water lines.

5. Water fitting according to either of Claims 3 and 4, **characterized in that** the mixing element comprises a branching to the at least two parallelly guided water lines.

6. Water fitting according to one of the preceding claims, **characterized in that** at least one device for setting the throughflow rate through at least one of the parallelly guided water lines is provided upstream of the common water outlet thereof.

7. Water fitting according to one of the preceding claims, **characterized in that** at least one of the control elements is manually operable.

8. Water fitting according to one of the preceding claims, **characterized in that** a device for setting the throughflow rate through one of the parallelly guided water lines is designed to transmit the value of the set throughflow rate to another device for setting the throughflow rate through another of the parallelly guided water lines, such that both devices for setting the throughflow rate can be set to the same throughflow rate by performing one setting.

9. Water fitting according to one of the preceding claims, **characterized in that** at least two of the control elements are in the form of electrical control elements.

10. Water fitting according to one of the preceding claims, **characterized in that** the means for controlling at least one of the control elements of one of the parallelly guided water lines are formed such that, in the event of an actuation of one control element, at least one of the further control elements in a further parallelly guided water line can be overridden.

11. Water fitting according to one of the preceding claims, **characterized in that** an outlet element which has the water outlet comprises at least one actuating element (52, 54) for the actuation of at least one of the control elements (51).

12. Water fitting according to the preceding claim, **characterized in that** the actuating element comprises a contactless motion sensor (52).

13. Water fitting according to one of the preceding claims, **characterized in that** the outlet element is in the form of a spray head which can be pulled out of the fitting housing.

## Revendications

1. Robinetterie à eau comprenant un boîtier de robinetterie, une sortie d'eau (6, 26) associée à au moins deux entrées d'eau (1, 2, 20, 21), au moins deux conduites d'eau (4, 5, 25, 30) qui s'étendent parallèlement à l'écoulement d'eau étant prévues entre les deux entrées d'eau (1, 2, 20, 21) ou plus et la sortie d'eau commune (6, 26), un actionneur (3, 9, 10, 11, 14, 28, 29) étant prévu dans chacune des conduites d'eau parallèles (4, 5, 25, 30) pour ouvrir et fermer l'écoulement d'eau, des moyens étant prévus pour commander les actionneurs (3, 9, 10, 11, 14, 28, 29) de manière à ce que, lorsque l'actionneur (3, 9, 10, 11, 14, 28, 29) est ouvert dans l'une des conduites d'eau parallèles (4, 5, 25, 30), le ou les autres actionneurs (3, 9, 10, 11, 14, 28, 29) sont fermés dans les autres conduites d'eau parallèles (4, 5, 25, 30) et un mitigeur (9) étant prévu de sorte que l'eau mitigée s'écoule dans une conduite d'eau commune (4) ou dans une dérivation (5) sous forme de conduites d'eau parallèles (4, 5, 25, 30), un premier point d'embranchement (7), au niveau duquel la conduite d'eau (4) et la dérivation (5) se rejoignent, étant prévu avant la sortie d'eau (6) dans le sens d'écoulement, les deux conduites d'eau (4, 5) se séparant au niveau d'un deuxième point d'embranchement (8), et le deuxième point d'embranchement (8) étant disposé après le mitigeur (9) dans le sens d'écoulement de l'eau de sorte que la température dans les deux conduites d'eau (4, 5) puisse être ajustée ou régulée par le biais du mitigeur (9).

2. Robinetterie à eau selon la revendication 1, **caractérisée en ce qu'**au moins un capteur d'état (12, 13, 27) est prévu pour détecter l'état de fonctionnement d'au moins un des actionneurs.

3. Robinetterie à eau selon l'une des revendications précédentes, **caractérisée en ce qu'**un élément mélangeur est prévu en parallèle (25, 30) et provient d'au moins deux conduites d'entrée d'eau.

4. Robinetterie à eau selon l'une des revendications précédentes, **caractérisée en ce qu'**au moins un élément mélangeur est disposé dans l'écoulement d'eau avant ou après un branchement d'au moins une conduite d'entrée menant aux au moins deux conduites d'eau parallèles.

5. Robinetterie à eau selon l'une des revendications 3 ou 4, **caractérisée en ce que** l'élément mélangeur comprend une dérivation menant aux au moins deux conduites d'eau parallèles.

6. Robinetterie à eau selon l'une des revendications précédentes, **caractérisée en ce qu'**au moins un dispositif de réglage du débit à travers au moins une des conduites d'eau parallèles est prévu avant leur sortie d'eau commune.

7. Robinetterie à eau selon l'une des revendications précédentes, **caractérisée en ce qu'**au moins un des actionneurs peut être actionné manuellement.

8. Robinetterie à eau selon l'une des revendications précédentes, **caractérisée en ce qu'**un dispositif de réglage du débit à travers l'une des conduites d'eau parallèles est conçu pour transférer la valeur du débit réglé à un autre dispositif de réglage du débit à travers une autre des conduites d'eau parallèles, de sorte que les deux dispositifs de réglage du débit puissent être réglés sur le même débit par un réglage.

9. Robinetterie à eau selon l'une des revendications précédentes, **caractérisée en ce qu'**au moins deux des actionneurs sont conçus comme des actionneurs électriques.

10. Robinetterie à eau selon l'une des revendications précédentes, **caractérisée en ce que** les moyens de commande d'au moins un des actionneurs d'une des conduites d'eau parallèles sont conçus de telle sorte que, lorsqu'un actionneur est actionné, au moins un des autres actionneurs dans une des autres conduites d'eau parallèles puisse être sur-commandé.

11. Robinetterie à eau selon l'une des revendications précédentes, **caractérisée en ce qu'**un élément de sortie qui comporte la sortie d'eau comprend au moins un élément d'actionnement (52, 54) destiné à actionner au moins un des actionneurs (51).

12. Robinetterie à eau selon la revendication précédente, **caractérisée en ce que** l'élément d'actionnement comprend un capteur de mouvement sans contact (52).

13. Robinetterie à eau selon l'une des revendications précédentes, **caractérisée en ce que** l'élément de sortie est conçu comme une pomme de douche pouvant être retirée du boîtier de robinetterie.
